Europäisches Patentamt

(19) European Patent Office

Office européen des brevets

(11) Veröffentlichungsnummer: **0 017 789**
**B1**

(12) # EUROPÄISCHE PATENTSCHRIFT

(45) Veröffentlichungstag der Patentschrift:
31.07.85

(51) Int. Cl.⁴: **F 16 J 3/06**

(21) Anmeldenummer: **80101490.3**

(22) Anmeldetag: **21.03.80**

(54) **Kolben-Zylinderanordnung.**

(30) Priorität: **11.04.79 DE 2914695**

(43) Veröffentlichungstag der Anmeldung:
**29.10.80 Patentblatt 80/22**

(45) Bekanntmachung des Hinweises auf die Patenterteilung:
**31.07.85 Patentblatt 85/31**

(84) Benannte Vertragsstaaten:
**AT BE CH DE FR GB IT LU NL SE**

(56) Entgegenhaltungen:
**DE - A - 2 554 733**
**DE - B - 2 914 694**
**FR - A - 975 545**
**FR - A - 2 351 261**
**US - A - 3 244 013**

(73) Patentinhaber: **Hydrowatt Systems Limited, 90 Great Russell Street, London WC1B 3RJ (GB)**

(72) Erfinder: **Frey, Bernhard, Freistrasse 2, CH-8200 Schaffhausen (CH)**

(74) Vertreter: **Frey, Conrad, Dr. jur. et al, Rechtsanwalt Utoquai 39, CH-8008 Zürich (CH)**

## Beschreibung

Die Erfindung bezieht sich auf eine Kolben-Zylinderanordnung nach dem Oberbegriff des Patentanspruchs 1.

Eine Kolben-Zylinderanordnung dieser Art ist bekannt aus der DE-A-2 554 733. Bei einer solchen Anordnung unterliegt das Dichtungselement einer oszillierenden Dehnung bei starken Druckbeanspruchungen unter entsprechend oszillierender Relativbewegung seiner Oberfläche gegenüber der Stützfläche des ersten Arbeitsgliedes, außerdem im Anschlußbereich zu diesem Arbeitsglied, d. h. an seiner Einspannstelle, stark ungleichförmigen inneren Spannungen. Es kommt daher für die Erzielung einer hohen Lebensdauer des Dichtungselementes auf eine möglichst gleichmäßige Zuführverteilung des Schmiermittels im Anschlußbereich an. Insbesondere für schlauchförmige Dichtungselemente ist eine über den Schlauchumfang gleichmäßig verteilte Druckzuführung des Schmiermittels wichtig. Da die Öffnungsfläche der Schmiermittelzuführung im allgemeinen vergleichsweise schmal sein sollte, um bei einer etwa vorübergehenden Anpressung infolge von gegenüber dem inneren Arbeitsdruck geringerem Schmiermittel-Stützdruck eine Beschädigung des Dichtungselementes durch Hineinpressen in die Zuführmündung zu vermeiden, sind einfache, hinterschneidungsfreie Verteilernuten, die sich mit vertretbarem Aufwand herstellen lassen, infolge ihrer geringen Breite und geringen Querschnitts für eine gleichmäßige Zuführverteilung des Schmiermittels über den Schlauchumfang im allgemeinen nicht ausreichend. Vielmehr sind im Bereich hinter der im allgemeinen ringförmigen Schmiermittel-Austrittsöffnung vergleichsweise voluminöse Verteilerkanäle und gegebenenfalls auch mehrere radiale Zuführkanäle erwünscht. Solche komplizierten Zuführ- und Verteilerkanalsysteme lassen sich bei der bekannten, einstückigen Ausführung des ersten Arbeitsgliedes im Anschluß- und Übergangsbereich mit vertretbarem Aufwand kaum herstellen.

Aufgabe der Erfindung ist daher die Schaffung einer Kolben-Zylinderanordnung, die sich durch vergleichsweise einfache Herstellbarkeit auch komplizierter Zuführ- und Verteilerkanalsysteme im Anschluß und Übergangsbereich des Dichtungselementes auszeichnet. Die Lösung dieser Aufgabe kennzeichnet sich bei einer Anordnung der eingangs genannten Art durch die Merkmale des Patentanspruchs 1. Die danach vorgesehene Ausbildung der Schmiermittelzuführung an einem gesonderten Ringkörper ermöglicht mit geringem Bearbeitungsaufwand eine freizügige und hinsichtlich der gleichmäßigen Schmiermittelzuführung optimierte Formgebung der Mündungskanäle in Verbindung mit einer für die Dichtungsbeanspruchung günstigen Mündungslage.

Weitere vorteilhafte Ausbildungen der erfindungsgemäßen Kolben-Zylinderanordnung sind in den Unteransprüchen 2 bis 11 enthalten.

Weitere Merkmale und Vorteile der Erfindung werden an den in den Zeichnungen schematisch dargestellten Ausführungsbeispielen erläutert. Hierin zeigt

Fig. 1a als linke Halbdarstellung einer erfindungsgemäßen Kolben-Zylinderanordnung eine Schmiermittelzuführmündung im Bereich zwischen Stützfläche und toroidförmigem Übergangs-Oberflächenabschnitt,

Fig. 1b als rechte Halbdarstellung eine erfindungsgemäße Kolben-Zylinderanordnung mit Schmiermittelzuführmündung im Bereich einer einspringenden Kante einer Arbeitsgliedausnehmung,

Fig. 2a in größerem Maßstab einen Teil-Axialschnitt des Anschlußbereiches eines Dichtungselementes mit Schmiermittelzuführung entsprechend Fig. 1a und

Fig. 2b einen Teil-Axialschnitt entsprechend Fig. 2a, jedoch für die Ausführung nach Fig. 1b.

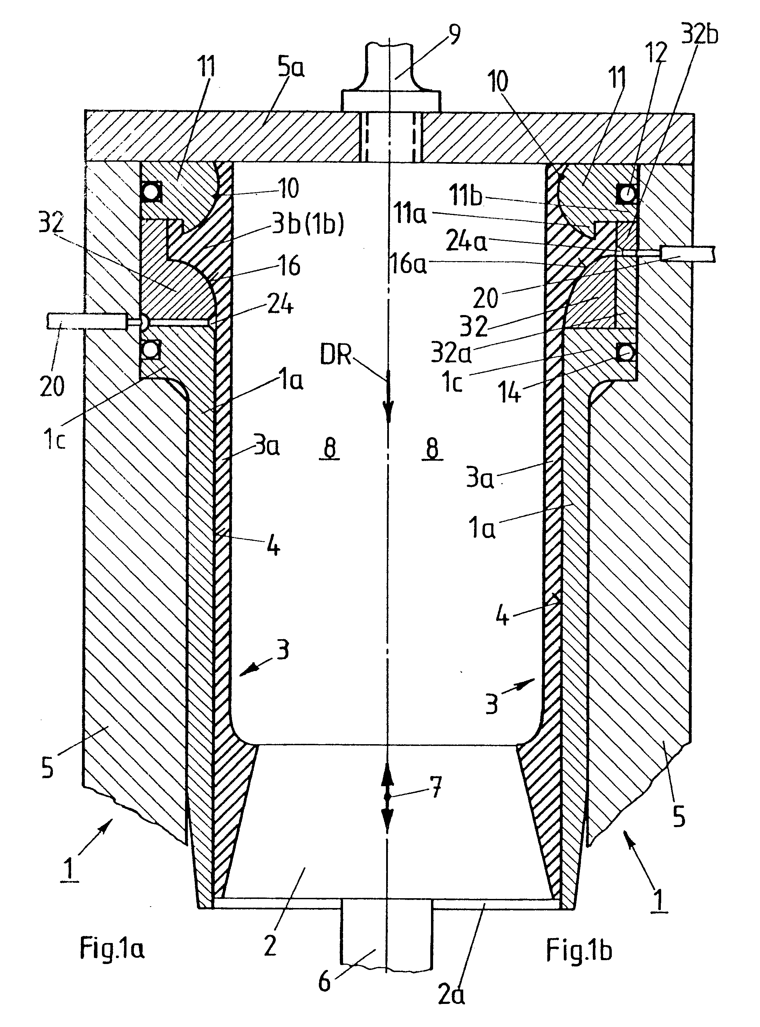

Für die Ausführungen nach Fig. 1a und 1b gemeinsam ist ein als Zylinder 1 ausgebildetes erstes Arbeitsglied sowie ein als Kolben 2 ausgebildetes zweites Arbeitsglied, welches über eine Kolbenstange 6 oder dergleichen in nicht dargestellter Weise im Sinne des Doppelpfeils 7 oszillierend angetrieben wird. Dabei bildet ein weichelastisches, beispielsweise aus geeignetem Gummi bestehendes, als Dichtungsschlauch 3 ausgebildetes Dichtungselement, das an seinem oberen Ende mit dem Zylinder 1 und an seinem unteren Ende mit dem Kolben 2 verbunden ist, einen gemäß der oszillierenden Kolbenbewegung pulsierenden Arbeitsraum 8. Der zylindrische Teil 3a des Dichtungsschlauches unterliegt dabei je nach der Annäherung des Kolbens 2 an seine untere Endstellung einer mehr oder weniger starken Dehnung in Richtung des Pfeiles DR. Im übrigen stützt sich der Dichtungsschlauch 3 unter dem Druck im Arbeitsraum 8 an einer Stützfläche 4 ab, die durch ein Zylinderinnenteil 1a gebildet wird, und zwar über ein Schmiermittel, vorzugsweise eine Schmierflüssigkeit, die sich in einem Spaltraum geringer Dicke zwischen der Außenfläche des Dichtungsschlauches 3 und der Stützfläche 4 befindet. Dieses Schmiermittel wird in noch zu erläuternder Weise in den Spaltraum eingeführt und strömt laufend, jedenfalls aber während des nach oben gerichteten Druckhubes des Kolbens 2 am unteren Ende des Spaltraumes gedrosselt in einen Niederdurckraum 2a ab. Bei geeigneter Ausbildung und Bemessung der Anordnung bildet sich ein Gleichgewicht zwischen Arbeitsdruck und Schmiermitteldruck im Spaltraum zwischen Dichtungsschlauch und Stützfläche aus, so daß keine unmittelbare Berührung oder Mischreibung an dem vergleichsweise empfindlichen, weichelastischen Dichtungsmaterial auftritt. Der Zylinderinnenteil 1a ist in eine Bohrung eines Zylinderaußenteiles 5 eingesetzt, das nach oben durch einen angeschraubten Deckel 5a mit einer Zuführ- und Ausstoßleitung 9 abgeschlossen ist.

Letztere ist für eine Arbeitsweise der Anordnung als Pumpe für ein flüssiges Arbeitsmittel mit nicht dargestellten, üblichen Ein- und Auslaßventilen bzw. mit einer Rückschlagventilanordnung üblicher Art verbunden.

Die Verbindung des Dichtungsschlauches mit dem Zylinder 1 wird durch einen im Querschnitt verstärkten Anschlußbereich 3b des Schlauches hergestellt, der radial auswärts in eine entsprechende Ausnehmung 1b des Zylinders eingreift und beispielsweise über eine Vulkanisationsverbindung 10 an einem im Querschnitt abgerundeten, toroidförmigen Anschlußring 11 befestigt ist. Letzterer ist ebenfalls in der Zylinderausnehmung 1b untergebracht und gegen deren Umfangsfläche beispielsweise mittels eines O-Ringes 12 abgedichtet. Entsprechend ist der Zylinderinnenteil 1a an einem radial verstärkten Abschnitt 1c mittels eines O-Ringes 14 gegen die Innenfläche der Zylinderausnehmung abgedichtet.

Für beide Ausführungen übereinstimmend ist ferner eine radial in den Zylinderaußenteil 5 eingeführte Schmiermittelzuführung 20 vorgesehen, von der im Beispielsfall nur das zylinderseitige Anschlußende einer Zuführungsleitung angedeutet ist. Für die Speisung dieser Schmiermittelzuführung kommt eine übliche Pumpenanordnung in Betracht, die kontinuierlich oder auch intermittierend arbeitet und einen ausreichenden Zuführdruck erzeugt. Es kommen hier übliche Pumpenanordnungen in Betracht, die keiner näheren Erläuterung und Darstellung bedürfen. Gegebenenfalls kann die Schmiermittelzuführung mit einer nicht dargestellten, an sich üblichen Rückschlagventilanordnung versehen sein, was insbesondere für eine intermittierende Schmiermittelzuführung in Betracht kommt.

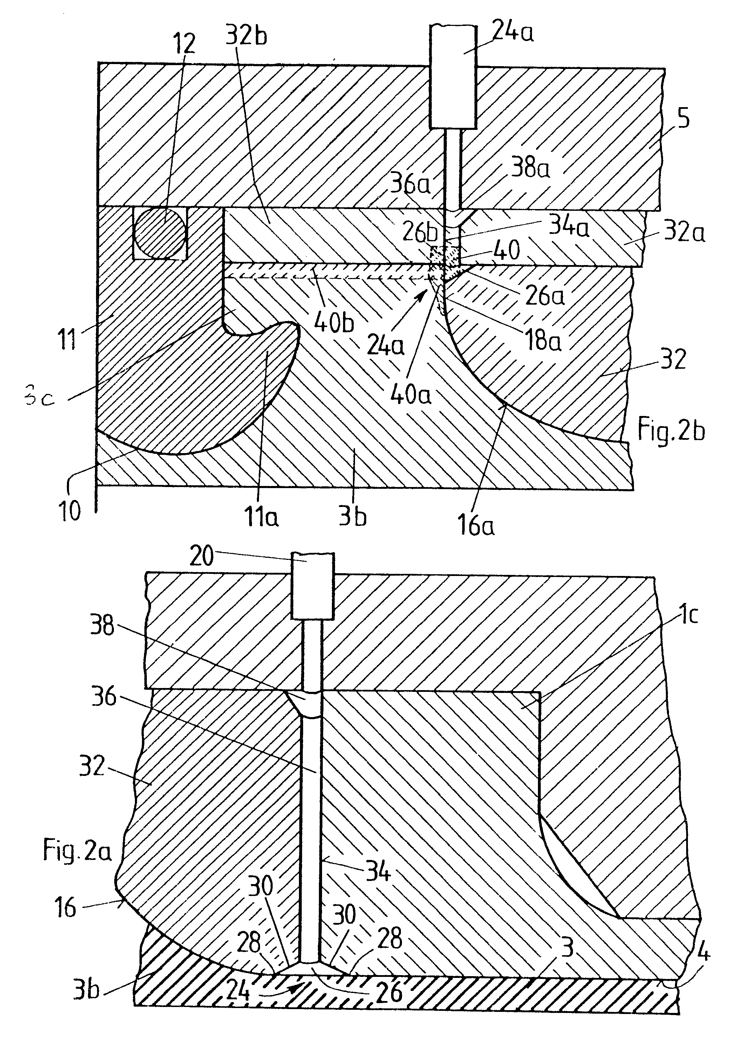

Bei der Ausführung nach Fig. 1 und 2a geht die zylindrische Stützfläche 4 im oberen Anschlußbereich des Dichtungsschlauches in einen im Profil konvex gekrümmten, insgesamt also toroidförmigen Oberflächenabschnitt 16 über, an den sich der verstärkte Wandungsabschnitt 3b des Dichtungsschlauches im Anschlußbereich abstützt. Weil sich die Schlauchdehnung gemäß Pfeil DR — wenn auch abgeschwächt — in diesem verstärkten Wandungsabschnitt fortsetzt, tritt an dem Oberflächenabschnitt 16 eine oszillierende Reibung des Dichtungsmaterials auf, und zwar wegen der Umlenkung der Dichtungsoberfläche nach außen unter Zugspannung, d. h. unter über den Arbeitsdruck hinaus verstärkter Anpressung. Die stetige Profilkrümmung des Oberflächenabschnitts 16 sorgt hier für günstige und materialschonende Gleitverhältnisse, insbesondere bei Verwendung eines gleitfreundlichen Materials auf der Zylinderseite und bei entsprechend feiner Oberflächenbearbeitung. Grundsätzlich kommen jedoch auch andere Profilformen in Betracht, beispielsweise eine Zusammensetzung aus gekrümmten und gradlinigen, gegen die Mantellinien der Stützfläche 4 geneigten Profilabschnitten oder — etwa bei geringeren Beanspruchungen — im wesentlichen nur eine geradlinige, geneigte Profilform, d. h. ein im wesentlichen kegelförmiger Übergangs-Oberflächenabschnitt.

Der Oberflächenabschnitt 16 wird durch einen vom Zylinderinnenteil bzw. von dessen radial verstärktem Teil 1c getrennten Ringkörper 32 mit im wesentlichen ebener unterer Stirnfläche 34 für die Anlage am Zylinderteil 1c gebildet. Infolge dieser Abtrennung kann der Oberflächenabschnitt 16 vergleichsweise einfach mit der erforderlichen Feinheit bearbeitet und unabhängig vom übrigen Zylindermaterial aus gleitfreundlichem Material hergestellt werden, insbesondere etwa auch aus gleitfreundlichem, reibungsarmem Kunststoff wie Tetrafluorpolyäthylen, das auch für viele Anwendungen ausreichende Druckfestigkeit aufweist.

Bei der Ausführung nach Fig. 1a und 2a ist eine Mündung 24 der Schmiermittelzuführung 20 im Anschlußbereich zwischen dem Oberflächenabschnitt 16 und der zylindrischen Stützfläche 4 angeordnet. Dies hat nicht nur die bereits in der Einleitung angedeuteten Vorteile hinsichtlich der Schmierung und Abstützung des Dichtungselementes, sondern ermöglicht insbesondere auch eine einfache Herstellung und günstige Formgebung der Mündung 24 sowie eines Systems von radialen und in Umfangsrichtung verlaufenden Verteilerkanälen für eine gleichmäßig verteilte Schmiermittelzuführung. Ein solcher Radialkanal 36 sowie ein äußerer Umfangskanal 38 sind in Fig. 2a angedeutet. Auch die Mündung 24 selber ist in Form einer Verteilernut 26 ausgebildet, und zwar mit in bezug auf die Mantellinienrichtung der Stützfläche 4 spitzwinklig geneigten Seitenflächen 30, die einerseits durch eine einfache Abschrägung der Endkante der Stützfläche 4 und andererseits durch eine entsprechende Abschrägung des Ringkörpers 32 gebildet werden. Auch die zweckmäßige Abrundung der Umfangskanten 28 der Mündungs-Verteilernut 26 läßt sich bei dieser getrennten Ausführung besonders leicht vornehmen. Diese Abrundung und die spitzwinklige Anordnung der Nut-Seitenflächen 30 sorgen für eine geringere Oberflächenbeanspruchung der oszillierend gleitenden Schlauchoberfläche in diesem kritischen Bereich.

Bei der Ausführung nach Fig. 1b und 2b ist die Mündung 24a der Schmiermittelzuführung 20 ebenfalls im Bereich eines toroidförmigen, stetig gekrümmten Übergangs-Oberflächenabschnitts 16a angeordnet, jedoch am oberen Ende dieses Bereiches, nämlich an einer zu der Dehnungsrichtung DR des Dichtungsschlauches entgegengesetzt orientierten Teil 18a dieses Oberflächenabschnitts. Dieser Flächenteil 18a ist im Beispielsfall als radiale, ebene Stirnfläche ausgebildet, jedoch kommt mit Vorteil gegebenenfalls auch eine gegen die Zylinderachse geneigte Ausbildung des Flächenprofils, d. h. einer Mündungsanordnung an einem konischen Oberflächenabschnitt, in Betracht. Für eine möglich stetige und krümmungsarme Einführung des Schmiermittelstromes in den Spaltraum zwischen Dichtungsschlauch und Stützfläche kann dies vorteilhaft sein, insbesondere in Verbindung mit einer tangentialen Einmündungsrichtung, wie sie auch im Beispielsfall angedeutet ist, hier allerdings mit radialer Einströmung in den Bereich des Oberflächenabschnitts 16a.

Auch hier ist wieder ein vom Zylinderinnenteil 1a getrennter Ringkörper 32 für die Bildung des Oberflächenabschnitts 16a mit den bereits genannten Vorteilen hinsichtlich der Oberflächenbearbeitung vorgesehen. Allerdings kommt auch eine einstückige Ausführung hier eher in Betracht, weil die radiale Schmiermittelzuführung im Bereich zwischen Stützfläche 4 und Oberflächenabschnitt 16a mit entsprechenden Kanälen entfällt.

Wie in Fig. 2b im Einzelnen dargestellt, ist der radial äußere Teil des Ringkörpers 32 als getrennter Distanzring 32a ausgebildet und in Axialrichtung zwischen dem verstärkten Teil 1c des Zylinderinnenteils 1 einerseits und dem Ringkörper 11 andererseits über einen weiteren Distanzring 32b verspannt. Diese Aufteilung in mehrere Ringkörper bietet auch hier den Vorteil, daß die Mündung 24a durch eine einfache Kantenabschrägung 26a des Ringkörpers 32 oder (strichliert angedeutet) als Ringnut 26b des Distanzringes 32b ausgebildet werden kann. Entsprechendes gilt für radiale Verteilernuten 36a und eine äußere Umfangs-Verteilernut 38a, die durch einfache Formgebung der Stirnfläche 34a des Distanzringes 32a herstellbar sind.

Diese Anordnung der Schmiermittelzuführmündung 34a im Bereich einer einspringenden Umfangskante der Ausnehmung 1b des Zylinders 1 bietet insbesondere bei hohen Arbeitsdrücken den Vorteil, daß ein Hineinpressen (sogenanntes »Ausextrudieren«) des weichelastischen Dichtungsmaterials in die Mündungsöffnung durch die winklige Abstützung des Dichtungsmaterials weitgehend ausgeschlossen ist. Zusätzlich kann dieser zerstörenden Verformung durch Einsetzen von porösen, für die Schmierflüssigkeit ausreichend durchlässigen Stützelementen in die Schmiermittelzuführmündung entgegengewirkt werden. Hierfür kommt z. B. feinmaschiges Metallgewebe, vorzugsweise Stahlgewebe, in Betracht. Ein solches Stützelement 40 ist in Fig. 2b innerhalb der Mündung 24a angedeutet. Stattdessen oder auch zusätzlich kann ein Stützelement in das Dichtungsmaterial im Mündungsbereich eingesetzt werden, beispielsweise in Form eines sich radial erstreckenden Stützelementes 40a oder eines sich axial an der Außenfläche des Dichtungsmaterials erstreckenden Stützelementes 40b.

Bei einer festen, insbesondere stoffschlüssigen Verbindung eines Stützelementes auf dem weichelastischen Dichtungsmaterial bringt eine entsprechende Verformbarkeit des Stützmaterials den Vorteil einer weniger ungleichmäßigen Verformung des Dichtungsmaterials. Dadurch werden störende Spannungskonzentrationen im Dichtungsmaterial bei dessen Verformung vermieden. Grundsätzlich können aber auch im wesentlichen starre Stützelemente angewendet werden, die nachgiebig in das Dichtungsmaterial eingesetzt oder an einer Oberfläche des Dichtungselementes angeordnet sind und sich mit der Verformung des Dichtungsmaterials verschieben können. Ein solches Stützelement kann insbesondere einen mehr oder weniger starren und einen nachgiebigen Abschnitt umfassen, wobei letzterer an der Verformung des Dichtungsmaterials teilnimmt. Beispielsweise kann ein Stützelement vorgesehen werden, das zwei den Elemeten 40a und 40b entsprechende Abschnitte aufweist, wobei der dünnere Abschnitt 40a normal zur Oberfläche des Dichtungsmaterials mit diesem den Druck des Schmiermittels an der Mündung 24a nachgeben und den Eintritt des Schmiermittels in den Spaltraum zwischen Dichtungsoberfläche und Übergangs-Oberflächenabschnitt 16a bzw. Stützfläche 4 freigeben kann.

Bei der Schmiermittelzuführung nach Fig. 2 kann es wichtig sein, den Zutritt von Schmierflüssigkeit in den Bereich der Verbindung zwischen Dichtungsmaterial und Zylinder, hier also in den Bereich der Vulkanisationsverbindung 10, durch besondere Maßnahmen auszuschließen. Hierfür ist ein rückwärtiger, zylinderartiger Ansatzteil 3c des verstärkten Anschlußabschnitts 3b des Dichtungsschlauches zwischen einer hinterschnittenen und im Profil abgerundeten Schulter 11a des Ringkörpers 11 einerseits und dem Distanzring 32b andererseits radial unter Druck verspannt. Diese Verspannung trägt auch zu einer sicheren Befestigung des Dichtungsschlauches bei.

## Patentansprüche

1. Kolben-Zylinderanordnung mit mindestens zwei einen Arbeitsraum bestimmenden Arbeitsgliedern, von denen mindestens eines einen Anschluß für ein verformungsweiches, insbesondere schlauchförmiges Dichtungselement (3) und eine Schmiermittelzuführung (20) aufweist, wobei sich das Dichtungselement (3) unter dem Druck im Arbeitsraum (8) über ein Schmiermittel gegen eine durch ein erstes Arbeitsglied (1) gebildete Stützfläche (4) abstützt, wobei ferner das erste Arbeitsglied (1) innerhalb eines Anschlußbereiches für das Dichtungselement (3) einen in bezug auf die Stützfläche (4) wenigstens abschnittsweise geneigt verlaufenden, insbesondere toroidförmigen Übergangs-Oberflächenabschnitt (16, 16a) mit gekrümmten Profil aufweist und wobei die Schmiermittelzuführung (20) eine mit einem Spaltraum zwischen der Stützfläche (4) und dem Dichtungselement (3) in Verbindung stehende Mündung (24, 24a) aufweist, dadurch gekennzeichnet, daß im Bereich des Übergangs-Oberflächenabschnitts (16) ein von dem ersten Arbeitsglied (1) gesonderter Ringkörper (32) gebildet ist, der eine Anlagefläche (34, 34a) für einen anschließenden Festkörper aufweist, und daß die Schmiermittelzuführung (20) mindestens einen Verteilerkanal (36, 38) aufweist, der wenigstens teilweise als Nut in der Anlagefläche (34, 34a) des Ringkörpers (32) und/oder in dem entsprechenden Oberflächenabschnitt des anschließenden Festkörpers ausgebildet ist.

2. Kolben-Zylinderanordnung nach Anspruch 1, dadurch gekennzeichnet, daß die Schmiermittelzuführmündung (24a) im Bereich eines zu der Dehnungsrichtung (DR) des Dichtungselementes (3) entgegengesetzt orientierten Teiles (18a) des Übergangs-Oberflächenabschnitts (16a) innerhalb einer durch diesen Oberflächenabschnitt gebildeten Ausnehmung des ersten Arbeitsgliedes (1) angeordnet ist.

3. Kolben-Zylinderanordnung nach Anspruch 2, dadurch gekennzeichnet, daß die Schmiermittelzuführmündung (24a) im Bereich eines zu der Stützfläche (4) wenigstens annähernd rechtwinklig verlaufenden Teiles (18a) des Übergangs-Oberflächenabschnitts (16a) angeordnet und vorzugsweise durch Nuten (26a) in diesem Flächenanteil (18a) und/oder in einer entsprechenden Stirnfläche (34a) des anschließenden Festkörpers (32a) gebildet ist.

4. Kolben-Zylinderanordnung nach Anspruch 2 oder 3, dadurch gekennzeichnet, daß die Schmiermittelzuführmündung (24a) im Bereich einer einspringenden Kante einer Arbeitskörperausnehmung (1b) angeordnet ist, welche Ausnehmung (1b) einen im Querschnitt verstärkten Anschlußabschnitt (3b) des Dichtungselementes (3) aufnimmt.

5. Kolben-Zylinderanordnung nach einem der vorangehenden Ansprüche, dadurch gekennzeichnet, daß die Schmiermittelzuführmündung (24a) wenigstens annähernd tangential in einen Spaltraum zwischen dem Dichtungselement einerseits und der Stützfläche (4) bzw. einem toroidförmigen Übergangs-Oberflächenabschnitt (16a) eines Arbeitsgliedes (1) andererseits einmündet.

6. Kolben-Zylinderanordnung nach einem der vorangehenden Ansprüche, dadurch gekennzeichnet, daß wenigstens ein Teil des verstärkten Anschlußabschnitts (3b) des Dichtungselementes (3) im Winkel, vorzugsweise quer zur Dehnungsrichtung (DR) des Dichtungselementes (3) zwischen festen Anschlußelementen (11a, 32b) unter Druckverspannung steht.

7. Kolben-Zylinderanordnung nach einem der vorangehenden Ansprüche, dadurch gekennzeichnet, daß in einem der Schmiermittelzuführmündung (24a) gegenüberliegenden Oberflächenbereich des Dichtungselementes (3) mindestens ein entsprechend dem Dichtungsmaterial verformungsweiches oder in dieses nachgiebig eingesetztes Stützelement (40a, 40b) angeordnet ist.

8. Kolben-Zylinderanordnung nach einem der vorangehenden Ansprüche, dadurch gekennzeichnet, daß im Bereich der Schmiermittelzuführung (24a) mindestens ein poröses, für das Schmiermittel durchlässiges Stützelement (40) angeordnet ist.

9. Kolben-Zylinderanordnung nach einem der vorangehenden Ansprüche, dadurch gekennzeichnet, daß mindestens ein Verteilerkanal als innerhalb der Stützfläche (4) bzw. des Übergangs-Oberflächenabschnitts (16, 16a) offene Verteilernut (26, 26a) ausgebildet ist.

10. Kolben-Zylinderanordnung nach Anspruch 9, dadurch gekennzeichnet, daß die Verteilernut (26) ein im wesentlichen dreieckförmiges Profil mit in bezug auf die Stützfläche (4) spitzwinklig geneigten Seitenflächen (30) auf der Seite des Übergangs-Oberflächenabschnitts (16) und/oder der Stützfläche (4) aufweist.

11. Kolben-Zylinderanordnung nach Anspruch 9 oder 10, dadurch gekennzeichnet, daß die Verteilernut (26) im Profil abgerundete Umfangskanten (28) auf der Seite des Übergangs-Oberflächenabschnitts (16) und/oder auf der Seite der Stützfläche (4) aufweist.

## Claims

1. Piston-cylinder assembly with at least two working members determining a working chamber, at least one of said working members being provided with a connection for a pliable, particularly hose-shaped sealing element (3) and with a lubricant feed (20), said sealing element (3) under the pressure in said working chamber resting via a lubricant against a supporting surface (4) provided by a first on of said working members (1), within a connection region for the sealing element (3) said first working member (1) being provided with a transitional surface section (16, 16a) extending inclined in relation to said support surface (4) at least in a section as well as having a cross-sectional curvature and particularly being toroidally shaped, said lubricant feed (20) having an orifice (24, 24a) being connected with a gap space between said support surface (4) and said sealing element (3) characterized in that in the region of said transitional surface section (16) there is provided an annular body (32) separate from said first working member (1), said annular body having an abutment surface (34, 34a) for an adjacent solid body, and in that said lubricant feed (20) includes at least one distribution channel (36, 38), which is formed at least partially as a groove in said abutment surface (34, 34a) of said annular body (32) and/or in the corresponding surface portion of the adjacent solid body.

2. Piston-cylinder assembly according to claim 1, characterized in that said lubricant feed orifice (24a) is located in the region of a part (18a) of said transitional surface section (16a), said surface section part (18a) facing oppositely to the expansion direction (DR) of said sealing element (3), and within an aperture of said first working member (1), said aperture being formed by said surface section (16a).

3. Piston-cylinder assembly according to claim 2, characterized in that said lubricant feed orifice (24a) is located in the region of a part (18a) of said transitional surface section (16a), said surface section part (18a) extending at least approximately rectangularly to said supporting surface (4), and is formed preferably by grooves (26a) in said surface section part (18a) and/or in a corresponding front face (34a) of said adjacent solid body (32a).

4. Piston-cylinder assembly according to claim 2 or 3, characterized in that said lubricant feed orifice (24a) is located in the region of a recessed edge of an aperture (1b) in a working body, said aperture (1b) housing a cross-sectionally enhanced connecting section (3b) of said sealing element (3).

5. Piston-cylinder assembly according to anyone of the preceding claims, characterized in that said lubricant feed orifice (24a) is arranged so as to run at least approximately tangentially into a gap space between said sealing element on one hand and toroidally shaped transitional surface section (16a) of a working membere (1) on the other hand.

6. Piston-cylinder assembly according to anyone of the preceding claims, characterized in that at least a part of an enhanced connecting section (3b) of said sealing element (3) stands under pressure-pretension between solid connecting elements (11a, 32b), said pressure-pretension acting under an angle, Preferably transverse, to the expansion direction (DR) of said sealing element (3).

7. Piston-cylinder assembly according to anyone of the preceding claims, characterized in that within a surface region of said sealing element (3) opposite to said lubricant feed orifice (24a) provision is made for at least one supporting element (40a, 40b) being pliable correspondigly to the sealing material or being elastically inserted therein.

8. Piston-cylinder assembly according to anyone of the preceding claims, characterized in that within the region of said lubricant feed orifice (24a) provision is made for at least one porous supporting element (40), which is pervious to the lubricant.

9. Piston-cylinder assembly according to anyone of the preceding claims, characterized in that at least one of said distribution channels is formed as an open distribution groove (26, 26a) within said supporting surface (4) or within said transitional surface section (16, 16a) resp.

10. Piston-cylinder assembly according to claim 9, characterized in that said distribution groove (26) has a substantially triangular cross-section with lateral surfaces (30) declined under an acute angle in relation to said supporting surface (4), such a lateral surface being located on the side of said transitional surface section (16) and/or on the side of said supporting surface (4).

11. Piston-cylinder assembly according to claim 9 or 10, characterized in that said distribution groove (26) has cross-sectionally rounded peripheral edges (28) on the side of said transitional surface section (16) and/or on the side of said supporting surface (4).

**Revendications**

1. — Agencement de piston-cylindre avec au moins deux organes de travail déterminant un espace de travail, dont au moins un présente un raccordement pour un élément d'étanchéité mou déformable (3) en particulier en forme de tuyau souple et une amenée de lubrifiant (20), l'élément d'étanchéité (3) s'appuyant sous pression dans l'espace de travail (8) par l'intermédiaire d'un lubrifiant contre une surface d'appui (4) formée par un premier organe de travail (1), le premier organe de travail (1) comportant, à l'intérieur d'une zone de raccordement pour l'élément d'étanchéité (3), une portion de surface de transition en particulier toroïdale (16, 16a) à profil courbe, s'étendant de façon inclinée au moins par portions relativement à la surface d'appui (4), et l'amenée de lubrifiant (20) comportant une embouchure (24, 24a) placée en communication avec un interstice entre la surface d'appui (4) et l'élément d'étanchéité (3), caractérisé en ce qu'au voisinage de la portion de surface de transition (16) est constitué un corps annulaire (32) séparé du premier organe de travail (1) et qui présente une surface d'application (34, 34a) pour un corps solide adjacent et en ce que l'amenée de lubrifiant (20) comporte au moins un canal distributeur (36, 38) qui est réalisé au moins partiellement sous forme de rainure dans la surface d'application (34, 34a) du corps annulaire (32) et/ou dans la portion de surface correspondante du corps solide adjacent.

2. — Agencement de piston-cylindre selon la revendication 1, caractérisé en ce que l'embouchure d'amenée de lubrifiant (24a) est disposée au voisinage d'une partie (18a) de la portion de surface de transition (16a) orientée à l'opposé de la direction de dilatation (DR) de l'élément d'etanchéité (3), à l'intérieur d'un évidement du premier organe de travail (1) formé par cette portion de surface.

3. — Agencement de piston-cylindre selon la revendication 2, caractérisé en ce que l'embouchure d'amenée de lubrifiant (24a) est disposée au voisinage d'une partie (18a) de la portion de surface de transition (16a), s'étendant au moins approximativement à angle droit par rapport à la surface d'appui (4) et constituée de préférence par des rainures (26a) dans cette partie de surface (18a) et/ou dans une face frontale correspondante (34a) du corps solide adjacent (32a).

4. — Agencement de piston-cylindre selon la revendication 2 ou 3, caractérisé en ce que l'embouchure d'amenée de lubrifiant (24a) est disposée au voisinage d'un bord rentrant d'un évidement de corps de travail (1b), lequel évidement (1b) reçoit une portion de raccordement (3b) de l'élément d'étanchéité (3) renforcée en section transversale.

5. — Agencement de piston-cylindre selon l'une des revendications précédentes, caractérisé en ce que l'embouchure d'amenée de lubrifiant (24a) débouche au moins approximativement tangentiel lement, dans un interstice entre l'élément d'étanchéité d'une part et la surface d'appui (4) ou une portion de surface de transition toroïdale (16a) d'un organe de travail (1) d'autre part.

6. — Agencement de piston-cylindre selon l'une des revendication précédentes, caractérisé en ce qu'au moins une partie de la portion de raccordement renforcée (3b) de l'élément d'étanchéité (3) est placée angulairement, de préférence transversalement à la direction de dilatation (DR) de l'élément d'étanchéité (3) entre des éléments de raccordement fixes (11a, 32b) sous contrainte de compression.

7. — Agencement de piston-cylindre selon l'une des revendications précédentes, caractérisé en ce que dans une zone de surface de l'élément d'étanchéité (3), située en regard de l'embouchure d'amenée de lubrifiant (24a), est disposé au moins un élément d'appui (40a, 40b) mou déformable d'une manière correspondant à la matière de garniture d'étanchéité ou inséré souplement dans celle-ci.

8. — Agencement de piston-cylindrie selon l'une des revendications précédentes, caractérisé en ce qu'au voisinage de l'amenée de lubrifiant (24a) est disposé au moins un élément d'appui (40) poreux et perméable au lubrifiant.

9. — Agencement de piston-cylindre selon l'une des revendications précédentes, caractérisé en ce qu'au moins un canal distributeur est réalisé sous forme d'une rainure distributrice ouverte (26, 26a) à l'intérieur de la surface d'appui (4) ou de la portion de surface de transition (16, 16a).

10. — Agencement de piston-cylindre selon la revendication 9, caractérisé en ce que la rainure distributrice (26) présente un profil sensiblement triangulaire avec des surfaces latérales (30) inclinées en angle aigu par rapport à la surface d'appui (4), du côté de la portion de surface de transition (16) et/ou de la surface d'appui (4).

11. — Agencement de piston-cylindre selon la revendication 9 ou 10, caractérisé en ce que la rainure distributrice (26) comporte des bords périphériques (28) à profil arrondi du côté de la portion de surface de transition (16) et/ou du côté de la surface d'appui (4).

Fig.1a

Fig.1b

Fig.2b

Fig.2a